# EUROPEAN PATENT APPLICATION

(11) **EP 4 245 476 A1**
(43) Date of publication of application: **20.09.2023**
(21) Application number: 22192361.8
(22) Date of filing: 26.08.2022
(51) Int. Cl.: B25J 9/16

(54) **CARGO HANDLING APPARATUS, CARGO HANDLING METHOD, AND CARGO HANDLING COMPUTER PROGRAM PRODUCT**

(30) Priority: 18.03.2022 JP 2022043338
(71) Applicant: KABUSHIKI KAISHA TOSHIBA, Minato-ku Tokyo 105-0023 (JP)
(72) Inventor: Nakamoto, Hideichi, Tokyo, 105-0023 (JP); Sugahara, Atsushi, Tokyo, 105-0023 (JP)
(74) Representative: Hoffmann Eitle

(57) **Abstract**

A cargo handling apparatus 10 according to an arrangement includes a holding method determination unit 50B and a hand 20. The holding method determination unit 50B determines a method of holding a cargo. The hand 20 includes an edge holding unit 21 and a tip sandwiching unit 22 that hold a cargo by sandwiching, and a suctioning unit 24 that holds the cargo by suctioning, and holds the cargo C according to the determination result of the holding method.

## Description

### FIELD

Arrangements described herein relate generally to a cargo handling apparatus, a cargo handling method, and a cargo handling computer program product.

### BACKGROUND

Apparatuses that assist cargo handling of articles are known. For example, a system for holding an article by sandwiching or hooking the article and sending the article to a predetermined path such as a conveyor is disclosed.

However, in the conventional technique, it has been difficult to hold an article that is difficult to be sandwiched or hooked. That is, according to the conventional technique, the performance of holding an article may be deteriorated.

### BRIEF DESCRIPTION OF THE DRAWINGS

FIG. 1 is a schematic view of a cargo handling apparatus;
FIG. 2 is an enlarged schematic view of a hand;
FIG. 3A is an enlarged schematic view of an edge holding unit;
FIG. 3B is an enlarged schematic view of an edge holding unit and a retraction mechanism unit;
FIG. 4A is an explanatory view of the edge holding unit in a retracted state;
FIG. 4B is an explanatory view of the edge holding unit in a developed state;
FIG. 5 is an enlarged schematic view of a tip sandwiching unit;
FIG. 6 is a block diagram illustrating the functional configuration of the cargo handling apparatus;
FIG. 7A is an explanatory view of a case where the cargo is held by suctioning;
FIG. 7B is an explanatory view of a case where the cargo is held by sandwiching;
FIG. 8A is an explanatory view of a flow of processing in a case where the cargo is held by sandwiching;
FIG. 8B is an explanatory view of a flow of processing in a case where the cargo is held by sandwiching;
FIG. 8C is an explanatory view of a flow of processing in a case where the cargo is held by sandwiching;
FIG. 8D is an explanatory view of a flow of processing in a case where the cargo is held by sandwiching;
FIG. 8E is an explanatory view of a flow of processing in a case where the cargo is held by sandwiching;
FIG. 8F is an explanatory view of a flow of processing in a case where the cargo is held by sandwiching;
FIG. 8G is an explanatory view of a flow of processing in a case where the cargo is held by sandwiching;
FIG. 9A is an explanatory view of a case where holding by suctioning is switched to holding by sandwiching;
FIG. 9B is an explanatory view of a case where holding by suctioning is switched to holding by sandwiching;
FIG. 10 is a flowchart illustrating a flow of information processing; and
FIG. 11 is a diagram illustrating a hardware configuration.

### DETAILED DESCRIPTION

The arrangements herein have been made in view of the above situation, and an object thereof is to provide a cargo handling apparatus, a cargo handling method, and a cargo handling computer program product capable of improving the performance of holding an article.

Hereinafter, a cargo handling apparatus, a cargo handling method, and a cargo handling computer program product will be described in detail with reference to the accompanying drawings.

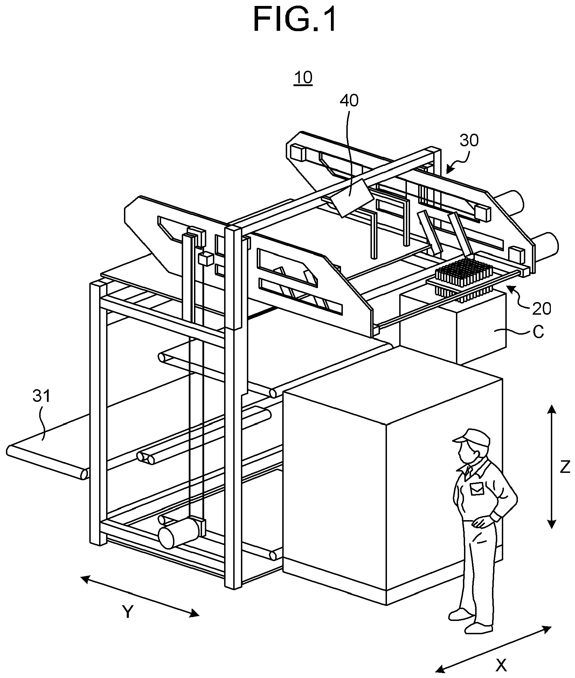

FIG. 1 is a schematic view of an example of a cargo handling apparatus 10 according to the present arrangement.

The cargo handling apparatus 10 is an apparatus for assisting cargo handling including vanning/devanning, transportation, palletize, picking, sorting, and assorting of articles. In the present arrangement, an aspect in which an article to be handled by cargo handling is a cargo C will be described as an example. An article to be a target of the cargo handling is not limited to the cargo C.

The cargo handling apparatus 10 includes a hand 20 and an arm 30. The hand 20 is a holding mechanism for holding the cargo C. The arm 30 is a support mechanism that supports the hand 20.

For example, the cargo handling apparatus 10 holds the cargo C loaded on a basket, a pallet, or the like with the hand 20, and drives the hand 20 and the arm 30 to place the cargo C at a predetermined place. The predetermined place is, for example, on a conveyor 31 that conveys the cargo C.

In FIG. 1 and the figures described below, the description will be given assuming that the Z direction is a direction along the vertical direction. In addition, the X direction and the Y direction will be described as directions along the horizontal direction. That is, the X direction and the Y direction are directions orthogonal to the Z direction. The X direction and the Y direction are directions orthogonal to each other.

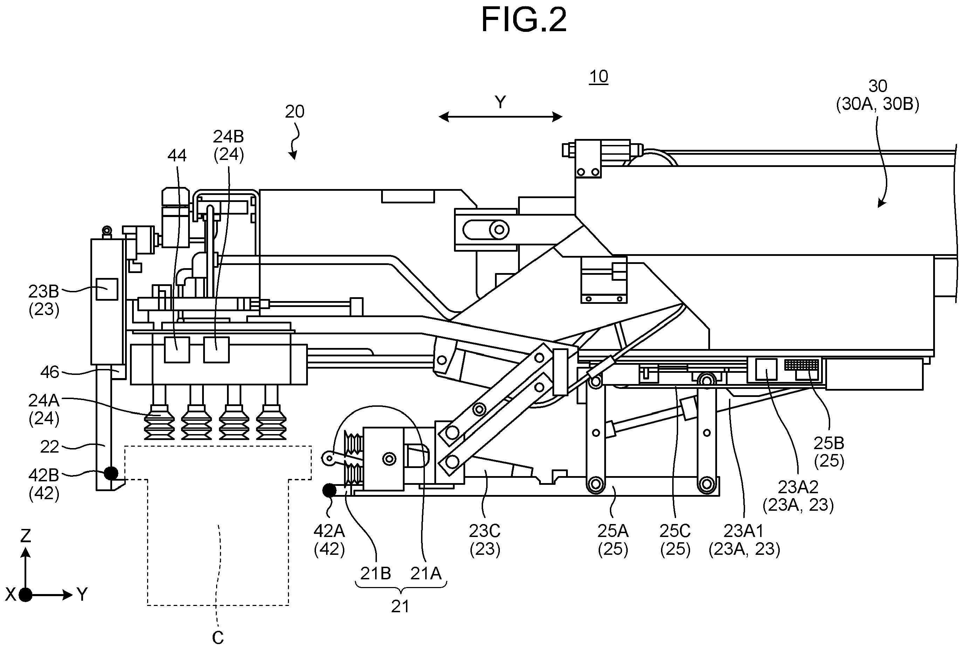

FIG. 2 is an enlarged schematic view of an example of the portion of the hand 20 in the cargo handling apparatus 10.

The hand 20 includes an edge holding unit 21 and a tip sandwiching unit 22 for holding the cargo C by sandwiching, and a suctioning unit 24 for holding the cargo C by suctioning, and holds the cargo C according to the determination result of the holding method.

Specifically, the hand 20 includes the edge holding unit 21, the tip sandwiching unit 22, a sandwiching driver 23, and the suctioning unit 24.

The sandwiching driver 23 is a driving unit for driving each of the edge holding unit 21 and the tip sandwiching unit 22. The sandwiching driver 23 includes a first sandwiching driver 23A, a second sandwiching driver 23B, and a third sandwiching driver 23C. The first sandwiching driver 23A includes an air cylinder 23A1 and a motor 23A2. Details of the sandwiching driver 23 will be described below.

The edge holding unit 21 is a mechanism for holding the edge portion of the cargo C.

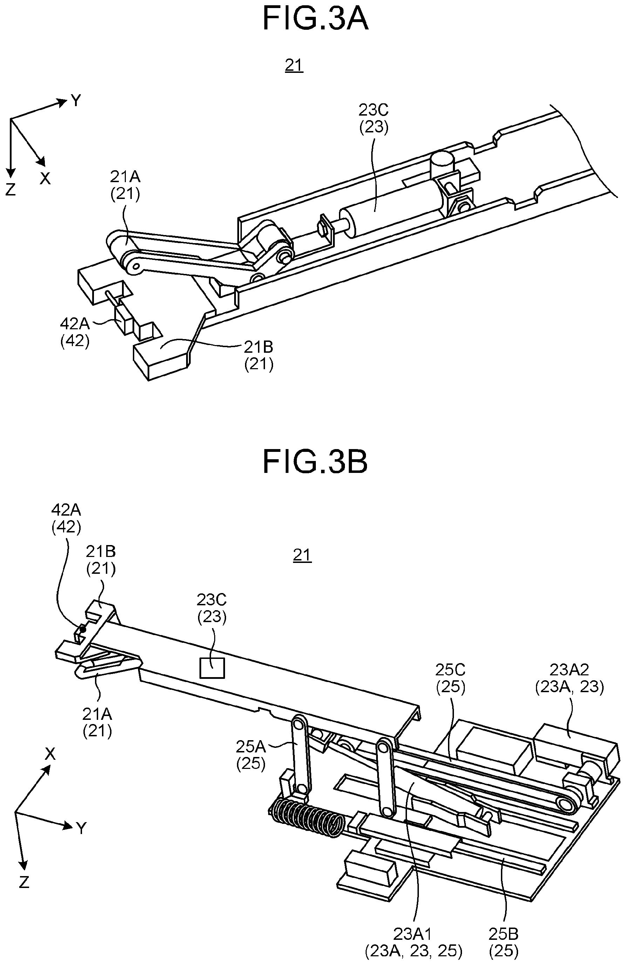

FIG. 3A is an enlarged schematic view of an example of the edge holding unit 21. The edge holding unit 21 includes, for example, a first claw unit 21A and a second claw unit 21B. The edge holding unit 21 is configured to be able to hold the edge portion of the cargo C with the first claw unit 21A and the second claw unit 21B.

For example, the first claw unit 21A is coupled to the third sandwiching driver 23C. The third sandwiching driver 23C is an example of the sandwiching driver 23 for driving the edge holding unit 21. In the present arrangement, the third sandwiching driver 23C generates force on the first claw unit 21A in a direction of pressing the first claw unit 21A toward the second claw unit 21B. Since the first claw unit 21A is pressed toward the second claw unit 21B, the edge portion of the cargo C can be gripped and held by the first claw unit 21A and the second claw unit 21B.

The second claw unit 21B is provided with a first sandwiching detector 42A. The first sandwiching detector 42A is an example of a sandwiching detector 42 for detecting sandwiching of the cargo C. The first sandwiching detector 42A is a sensor for detecting that the edge holding unit 21 has sandwiched the cargo C. For example, a known sensor capable of detecting approach or contact of the cargo C to/with the second claw unit 21B may be used as the first sandwiching detector 42A.

Returning to FIG. 2, the description will be continued. The edge holding unit 21 is supported by a retraction mechanism unit 25.

The retraction mechanism unit 25 is a mechanism for switching the state of the edge holding unit 21 to either the retracted state or the developed state. In addition, the retraction mechanism unit 25 is a mechanism for moving the position of the edge holding unit 21 in a direction toward or away from the cargo C to be held. By switching the state of the edge holding unit 21 to the retracted state, it is possible to suppress interference of the edge holding unit 21 with hold of the cargo C by suctioning.

The retracted state indicates a state in which the edge holding unit 21 is retracted to a position where the edge holding unit 21 does not interfere with the cargo C. The developed state indicates a state in which the edge holding unit 21 is developed to a position where the edge holding unit 21 can hold the cargo C.

FIG. 3B is an enlarged schematic view of an example of the edge holding unit 21 and the retraction mechanism unit 25.

The retraction mechanism unit 25 includes a parallel link 25A, a linear guide 25B, a belt pulley 25C, and the air cylinder 23A1. The parallel link 25A is a mechanism that supports the edge holding unit 21. The air cylinder 23A1 and the motor 23A2 are an example of the first sandwiching driver 23A. The first sandwiching driver 23A is an example of the sandwiching driver 23 for driving the edge holding unit 21.

The motor 23A2 is the first sandwiching driver 23A for moving the edge holding unit 21 in a direction toward or away from the cargo C to be held. The driving force of the motor 23A2 is transmitted to the parallel link 25A via the belt pulley 25C. Therefore, the edge holding unit 21 is linearly driven along the linear guide 25B arranged in parallel to the arrow Y direction (horizontal direction). That is, the edge holding unit 21 moves in a direction toward or away from the cargo C to be held by driving by the motor 23A2 of the first sandwiching driver 23A, the linear guide 25B, and the belt pulley 25C. By controlling the position of the edge holding unit 21 along the arrow Y direction using the motor 23A2, it is possible to adjust the position such that the edge holding unit 21 is positioned at a position corresponding to the size or the like of the cargo C.

The air cylinder 23A1 is the first sandwiching driver 23A for changing the state of the parallel link 25A. The state of the parallel link 25A is changed by driving by the air cylinder 23A1, and the state of the edge holding unit 21 supported by the parallel link 25A is switched to the retracted state or the developed state.

By using the air cylinder 23A1 as the first sandwiching driver 23A, it is possible to reduce the weight of the mechanism and to facilitate the control as compared with the electric motor.

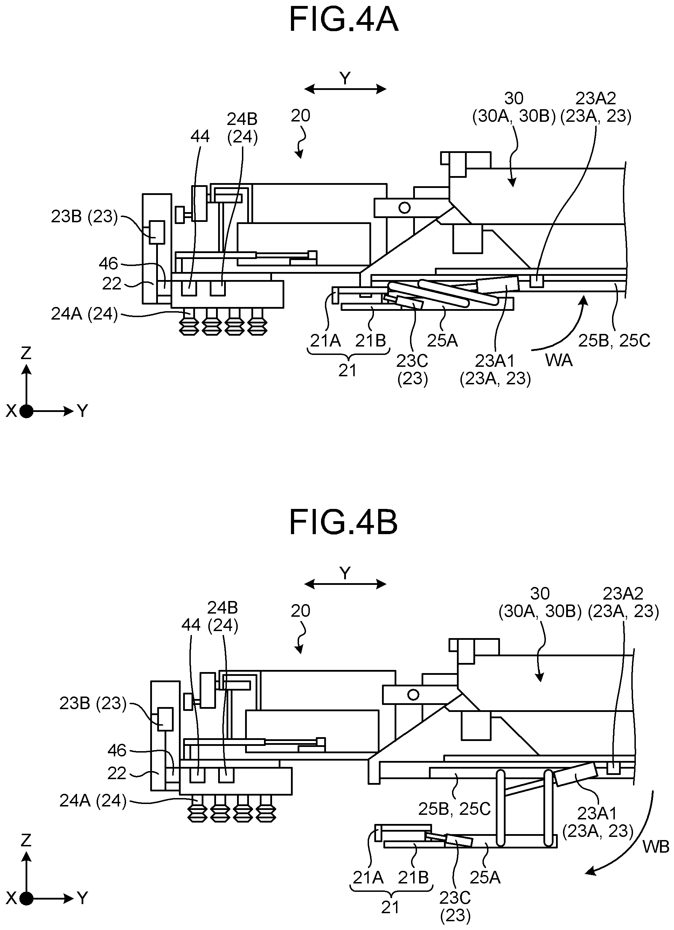

FIG. 4A is an explanatory view of an example of the edge holding unit 21 in the retracted state. The state of the parallel link 25A is changed by driving by the air cylinder 23A1 of the first sandwiching driver 23A. For example, when the parallel link 25A is folded in the arrow WA direction, the state of the edge holding unit 21 is switched to the retracted state in which the edge holding unit 21 is retracted to a position of not interfering with the cargo C.

FIG. 4B is an explanatory view of an example of the edge holding unit 21 in the developed state. The state of the parallel link 25A is changed by driving by the air cylinder 23A1 of the first sandwiching driver 23A. For example, when the parallel link 25A is developed in the arrow WA direction, the state of the edge holding unit 21 is switched to the developed state in which the edge holding unit 21 is developed to the position where the cargo C can be held.

Returning to FIG. 2, the description will be continued.

The tip sandwiching unit 22 is a mechanism for sandwiching and holding the cargo C with the edge holding unit 21.

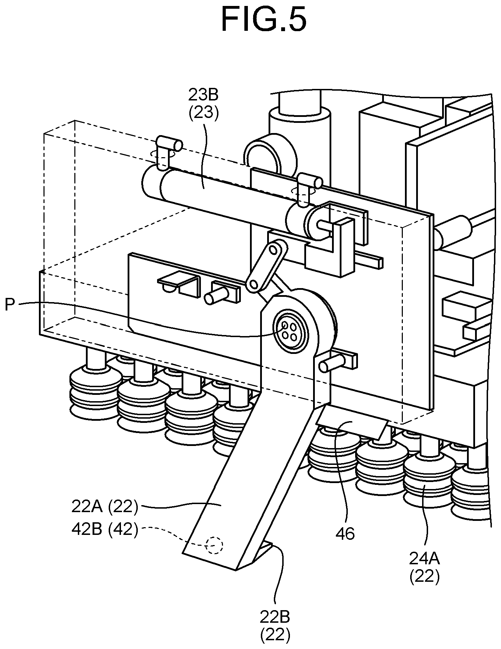

FIG. 5 is an enlarged schematic view of an example of the tip sandwiching unit 22. The tip sandwiching unit 22 includes a tip link unit 22A and a claw unit 22B. The claw unit 22B is a member for sandwiching the cargo C. The claw unit 22B is supported by the tip link unit 22A. In the present arrangement, the claw unit 22B is provided at one end portion of the tip link unit 22A in the extending direction.

The other end portion of the tip link unit 22A in the extending direction is coupled to the second sandwiching driver 23B via a drive mechanism or the like. The second sandwiching driver 23B is the sandwiching driver 23 for driving the tip sandwiching unit 22. The second sandwiching driver 23B is, for example, a cylinder.

The second sandwiching driver 23B rotationally drives the tip link unit 22A about a center portion P of the other end portion of the tip link unit 22A as the rotation center to switch the state of the tip sandwiching unit 22 including the tip link unit 22A and the claw unit 22B from the retracted state to the developed state. In addition, the second sandwiching driver 23B rotationally drives the tip link unit 22A about the center portion P of the other end portion of the tip link unit 22A as the rotation center to switch the tip sandwiching unit 22 including the tip link unit 22A and the claw unit 22B from the developed state to the retracted state.

Switching the state of the tip sandwiching unit 22 to the developed state means switching the state to a state in which the tip sandwiching unit 22 is developed to a position where the cargo C can be held. Switching the state of the tip sandwiching unit 22 to the retracted state indicates that the tip sandwiching unit 22 is in a state in which the tip sandwiching unit 22 is retracted to a position where the tip sandwiching unit 22 does not interfere with the cargo C. When the state of the tip sandwiching unit 22 is switched from the retracted state to the developed state, for example, the tip sandwiching unit 22 is insertable into the space between the cargo C and another cargo. In addition, when the state of the tip sandwiching unit 22 is switched to the retracted state, it is possible to suppress interference of the tip sandwiching unit 22 with hold of the cargo C by suctioning.

The claw unit 22B is provided with a second sandwiching detector 42B. The second sandwiching detector 42B is an example of the sandwiching detector 42 for detecting sandwiching of the cargo C. The second sandwiching detector 42B is a sensor for detecting that the tip sandwiching unit 22 has sandwiched the cargo C. For example, a known sensor capable of detecting approach or contact of the cargo C to/with the claw unit 22B may be used as the second sandwiching detector 42B.

In the present arrangement, the tip sandwiching unit 22 is provided with a space detector 46. The space detector 46 is a sensor for detecting a space between the cargo C to be held and another cargo in a region facing the tip sandwiching unit 22 in the peripheral space of the cargo C. A known sensor capable of detecting a space may be used as the space detector 46.

Returning to FIG. 2, the description will be continued.

The suctioning unit 24 is a mechanism for holding the cargo C by suctioning. The suctioning unit 24 includes a suctioning mechanism 24A and a suctioning driver 24B.

The suctioning mechanism 24A is a member that suctions and is attached to the surface of the cargo C. The suctioning mechanism 24A includes, for example, one or a plurality of suctioning pads. In the present arrangement, an aspect in which the suctioning mechanism 24A includes a plurality of suctioning pads will be described as an example.

The suctioning driver 24B is a mechanism for adjusting the suctioning force of the suctioning unit 24. The suctioning driver 24B is, for example, a vacuum pump that controls the suctioning force of the suctioning pads.

The suctioning force of each of the plurality of suctioning pads serving as the suctioning mechanism 24A is adjusted by driving by the suctioning driver 24B, whereby suctioning and releasing from suctioning of the cargo C are controlled.

The suctioning driver 24B is further configured to be able to adjust the angle of the suctioning mechanism 24A. The adjustment of the angle of the suctioning mechanism 24A adjusts the angle of the cargo C suctioned by the suctioning mechanism 24A. In the present arrangement, the angle of the suctioned cargo C indicates the angle of the cargo C with respect to the horizontal direction.

In the present arrangement, the suctioning unit 24 is provided with a weight detector 44.

The weight detector 44 is a sensor for detecting the weight of the cargo C. In the present arrangement, the weight detector 44 detects the weight of the cargo C suctioned by the suctioning unit 24. A known sensor capable of detecting the weight of the cargo C may be used as the weight detector 44.

The arm 30 is a member that supports the hand 20. The arm 30 includes an arm main body 30A and an arm driver 30B. The arm main body 30A is a main body of the arm 30, and is a member that supports the hand 20. The arm driver 30B is a driving unit for adjusting the position of the hand 20 supported by the arm main body 30A.

Next, a functional configuration of the cargo handling apparatus 10 according to the present arrangement will be described.

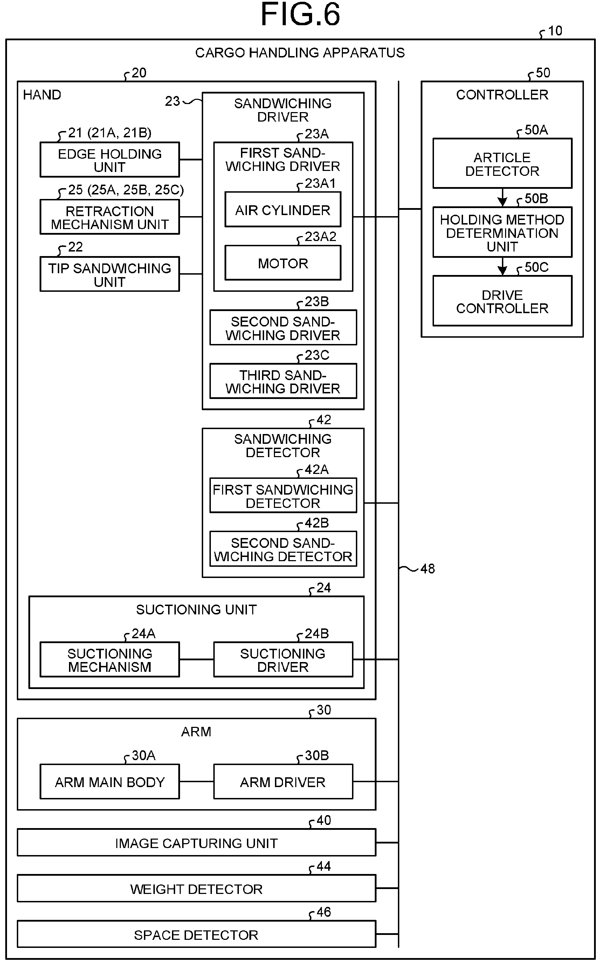

FIG. 6 is a block diagram illustrating an example of the functional configuration of the cargo handling apparatus 10.

The cargo handling apparatus 10 includes the hand 20, the arm 30, an image capturing unit 40, the weight detector 44, the space detector 46, and a controller 50. The hand 20, the arm 30, the image capturing unit 40, the weight detector 44, the space detector 46, and the controller 50 are communicably connected via a bus 48 or the like.

The image capturing unit 40 acquires a captured image as image data by image capturing. The image capturing unit 40 is disposed at a position where a captured image of an area including the cargo C to be held by the hand 20 can be acquired. For example, as illustrated in FIG. 1, the image capturing unit 40 is disposed on a support member or the like included in the cargo handling apparatus 10. Returning to FIG. 6, the description will be continued. In addition, the field angle of image-capturing, the direction of image-capturing, and the like of the image capturing unit 40 are adjusted in advance such that a captured image of an area including the cargo C to be held can be acquired.

The controller 50 performs information processing in the cargo handling apparatus 10. The controller 50 is, for example, a dedicated or general-purpose computer.

The controller 50 includes an article detector 50A, a holding method determination unit 50B, and a drive controller 50C. At least one of the article detector 50A, the holding method determination unit 50B, and the drive controller 50C is implemented by, for example, one or a plurality of processors. For example, each of the above-described units may be implemented by causing a processor such as a central processing unit (CPU) to execute a program, that is, by software. Each of the above-described units may be implemented by a processor such as a dedicated integrated circuit (IC), that is, by hardware. Each of the above-described units may be implemented by using software and hardware in combination. In the case of using a plurality of processors, each processor may implement one of the units, or may implement two or more of the units.

The article detector 50A detects the cargo C. The article detector 50A detects the position, size, and type of the cargo C to be held by performing image analysis on the captured image captured by the image capturing unit 40. A known method may be used for the image analysis.

The holding method determination unit 50B determines a method of holding the cargo C. The holding method determination unit 50B determines a holding method indicating either a suctioning-holding method or a sandwiching holding method based on the detection result of the cargo C by the article detector 50A.

The suctioning-holding method is a holding method of holding the cargo C by suctioning by the suctioning unit 24. The sandwiching holding method is a holding method of holding the cargo C by sandwiching by the edge holding unit 21 and the tip sandwiching unit 22.

The holding method determination unit 50B determines whether or not the cargo C can be suctioned by the suctioning unit 24 depending on the position, size, and type of the cargo C included in the detection result of the cargo C received from the article detector 50A.

For example, the controller 50 stores in advance suction possibility information on whether or not the cargo C can be suctioned in association with information indicating a combination of the position, size, and type of the cargo C. Then, the holding method determination unit 50B may determine whether or not the suction possibility information corresponding to the combination of the position, size, and type of the cargo C indicated by the detection result of the cargo C received from the article detector 50A indicates that suctioning is possible.

In a case where the holding method determination unit 50B determines that the cargo C can be suctioned by the suctioning unit 24, the holding method determination unit 50B determines the suctioning-holding method as the holding method. On the other hand, in a case where the holding method determination unit 50B determines that the cargo C cannot be suctioned by the suctioning unit 24, the holding method determination unit 50B determines the sandwiching holding method as the holding method.

The hand 20 holds the cargo C according to the determination result of the holding method by the holding method determination unit 50B. Specifically, the hand 20 holds the cargo C under the control by the drive controller 50C.

The drive controller 50C controls the hand 20, or the hand 20 and the arm 30 such that the cargo C is held based on the determination result by the holding method determination unit 50B.

First, description will be given assuming that the suctioning-holding method is determined as the holding method. In other words, a case where the holding method determination unit 50B determines that the cargo C can be suctioned will be described.

In this case, the drive controller 50C controls the suctioning unit 24 such that the suctioning unit 24 suctions the cargo C. Under the control of the suctioning unit 24 by the drive controller 50C, the cargo C is held by suctioning.

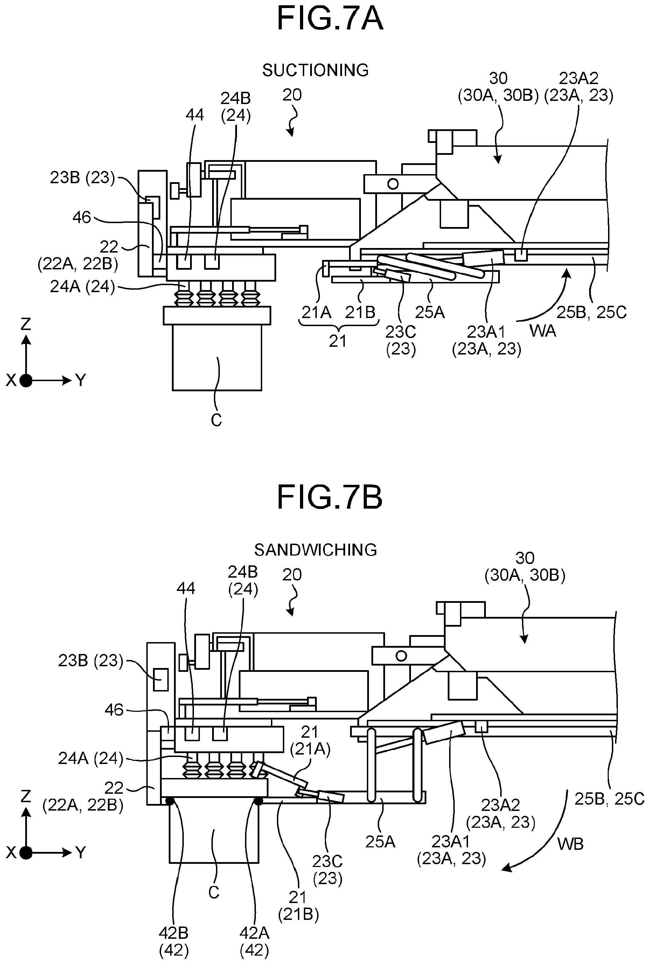

FIG. 7A is an explanatory view of an example of a case where the cargo C is held by suctioning.

The drive controller 50C controls the sandwiching driver 23 such that at least one of the edge holding unit 21 and the tip sandwiching unit 22 is brought into the retracted state. Preferably, the drive controller 50C controls both the edge holding unit 21 and the tip sandwiching unit 22 to be in the retracted state.

Specifically, the drive controller 50C controls the air cylinder 23A1 such that the edge holding unit 21 is brought into the retracted state. The air cylinder 23A1 is driven by the control of the air cylinder 23A1 by the drive controller 50C, and the drive of the air cylinder 23A1 folds the parallel link 25A in the arrow WA direction. Therefore, the state of the edge holding unit 21 supported by the parallel link 25A is switched to the retracted state in which the edge holding unit is retracted to a position where the edge holding unit 21 does not interfere with the cargo C.

In addition, the drive controller 50C controls the second sandwiching driver 23B such that the tip sandwiching unit 22 is brought into the retracted state. The second sandwiching driver 23B rotationally drives the tip link unit 22A under the control by the drive controller 50C to switch the state of the tip sandwiching unit 22 including the tip link unit 22A and the claw unit 22B from the developed state to the retracted state.

Then, the drive controller 50C controls the arm driver 30B such that the hand 20 supported by the arm main body 30A is moved to a position where the cargo C can be suctioned. Specifically, the drive controller 50C controls the arm driver 30B such that the hand 20 is moved to a position where the suctioning mechanism 24A included in the hand 20 can suction the cargo C. For example, the drive controller 50C reads information related to the position and size of the cargo C included in the detection result of the cargo C by the article detector 50A, thereby identifying the position of the cargo C on the horizontal plane which is the XY plane. Then, the arm driver 30B may be controlled such that the suctioning mechanism 24A is arranged to face the position.

Furthermore, the drive controller 50C controls the suctioning driver 24B such that the suctioning mechanism 24A of the suctioning unit 24 suctions the cargo C. For example, the drive controller 50C controls the suctioning driver 24B and the arm driver 30B such that the cargo C is suctioned and lifted to a height at which the weight detector 44 included in the suctioning unit 24 can detect the weight of the cargo C.

In a case where the weight of the cargo C detected by the weight detector 44 is an acceptable weight for suctioning by the suctioning unit 24, the drive controller 50C controls the suctioning unit 24 such that the suctioning of the cargo C is continued to hold the cargo C. Then, the drive controller 50C controls the arm driver 30B such that the cargo C held by the suctioning unit 24 is placed at a predetermined position such as on the conveyor 31.

The drive controller 50C stores, in advance, information indicating the acceptable weight for suctioning by the suctioning unit 24. Then, in a case where the weight of the cargo C detected by the weight detector 44 is equal to or less than the acceptable weight for suctioning stored in advance, the drive controller 50C may determine that the weight of the cargo C is an acceptable weight for suctioning by the suctioning unit 24.

Next, description will be given assuming that the sandwiching holding method is determined as the holding method. In other words, a case where the holding method determination unit 50B determines that the cargo C cannot be suctioned will be described.

In this case, the drive controller 50C controls the hand 20 such that the cargo C is sandwiched between the edge holding unit 21 and the tip sandwiching unit 22. That is, in this case, the drive controller 50C controls the cargo C to be held by sandwiching.

FIG. 7B is an explanatory view of an example of a case where the cargo C is held by sandwiching.

The drive controller 50C controls the edge holding unit 21 and the tip sandwiching unit 22 to be in the developed state (see the arrow WB direction). Then, the drive controller 50C controls the sandwiching driver 23 such that the cargo C is sandwiched between the edge holding unit 21 and the tip sandwiching unit 22. Under the control of the sandwiching driver 23 by the drive controller 50C, the cargo C is held by sandwiching between the edge holding unit 21 and the tip sandwiching unit 22.

A flow of processing in a case where the cargo C is held by sandwiching will be described in detail.

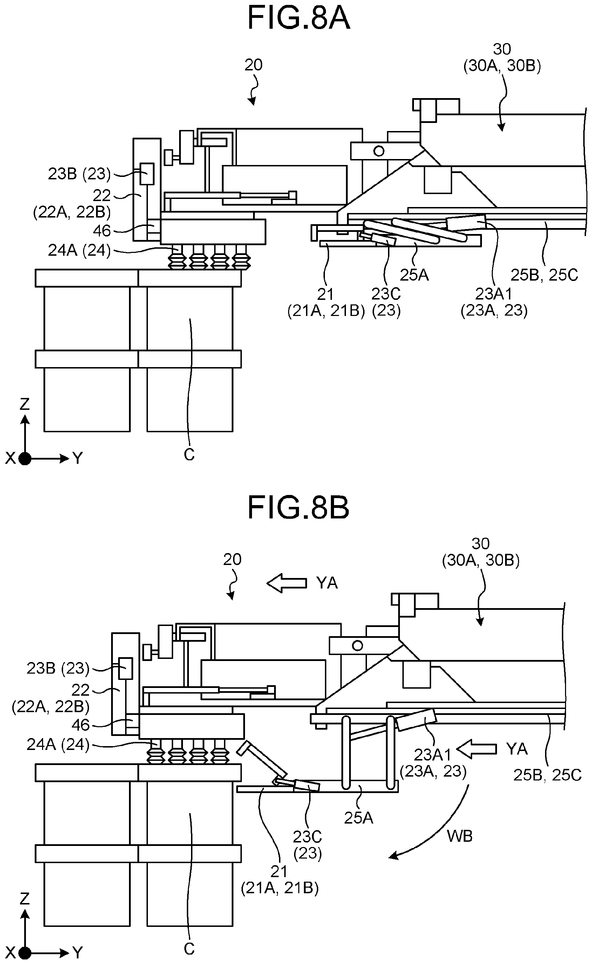

FIGS. 8A to 8G are explanatory views of an example of a flow of processing in a case where the cargo C is held by sandwiching.

First, as illustrated in FIG. 8A, a scene in which the edge holding unit 21 and the tip sandwiching unit 22 are in a retracted state will be described. In this state, it is assumed that the holding method determination unit 50B determines the sandwiching holding method.

Then, as illustrated in FIG. 8B, the drive controller 50C controls the arm driver 30B such that the hand 20 supported by the arm main body 30A is moved to a position where the cargo C can be held by sandwiching (see the arrow YA direction). Specifically, the drive controller 50C controls the arm driver 30B such that the edge holding unit 21 and the tip sandwiching unit 22 included in the hand 20 are moved to a position where the edge holding unit 21 and the tip sandwiching unit 22 can hold the cargo C after development. For example, the drive controller 50C identifies the position of the cargo C by reading information related to the position and size of the cargo C included in the detection result of the cargo C by the article detector 50A. Then, the drive controller 50C may control the arm driver 30B such that the edge holding unit 21 and the tip sandwiching unit 22 in the developed state are arranged in the vicinity of the position.

In addition, as illustrated in FIG. 8B, the drive controller 50C controls the air cylinder 23A1 such that the edge holding unit 21 is brought into the developed state. The air cylinder 23A1 is driven by controlling of the air cylinder 23A1 by the drive controller 50C, and the drive of the air cylinder 23A1 extends the parallel link 25A in the arrow WB direction. Therefore, the state of the edge holding unit 21 supported by the parallel link 25A is switched to the developed state in which the edge holding unit 21 is developed to a position where the edge holding unit 21 can hold the cargo C. Further, the drive controller 50C drives the air cylinder 23A1 to adjust the position of the edge holding unit 21 to a position where the edge holding unit 21 can hold the cargo C.

Next, the drive controller 50C controls driving of at least one of the arm 30 and the hand 20 such that a space S into which the tip sandwiching unit 22 is insertable is formed with respect to the cargo C.

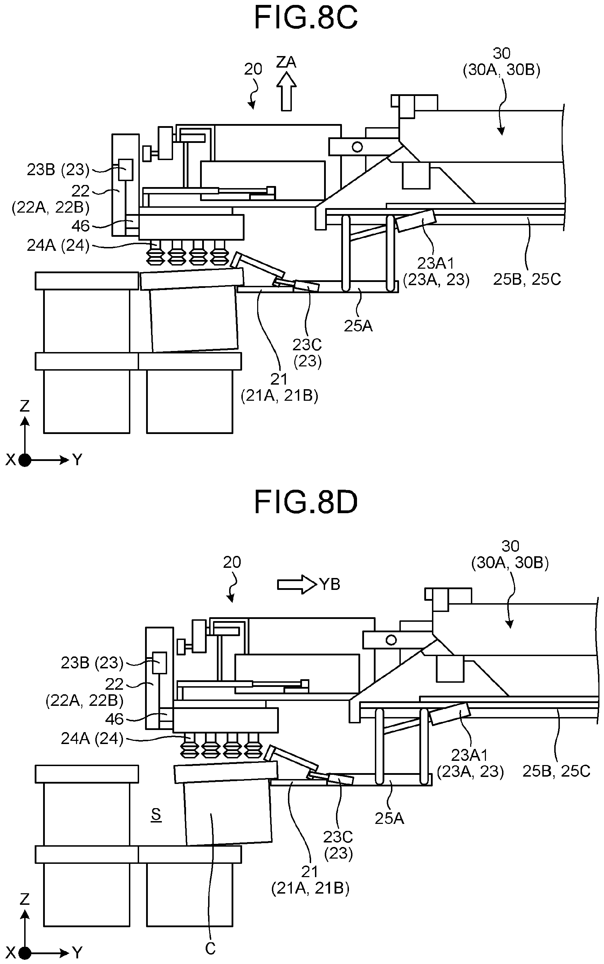

Specifically, as illustrated in FIG. 8C, the drive controller 50C controls the third sandwiching driver 23C such that the edge portion of the cargo C is held by the first claw unit 21A and the second claw unit 21B. For example, the drive controller 50C controls the third sandwiching driver 23C to cause the first claw unit 21A to generate force in a direction of pressing the first claw unit 21A toward the second claw unit 21B. When the first claw unit 21A is pressed toward the second claw unit 21B, the first claw unit 21A and the second claw unit 21B hold the edge portion of the cargo C.

Then, the drive controller 50C further controls the arm driver 30B to lift the hand 20 in a direction opposite to the gravity direction (arrow ZA direction).

Next, as illustrated in FIG. 8D, the drive controller 50C controls the arm driver 30B such that the cargo C is pulled toward the edge holding unit 21, that is, in the arrow YB direction.

Then, the drive controller 50C continues this processing until the drive controller 50C determines that the space S into which the tip sandwiching unit 22 is insertable, is formed between the cargo C to be held and another article disposed next to the cargo C.

The drive controller 50C may determine whether or not the space S into which the tip sandwiching unit 22 is insertable is formed between the cargo C to be held and another article disposed next to the cargo C by performing image analysis on the captured image captured by the image capturing unit 40. Furthermore, the drive controller 50C may also determine whether or not the detection result by the space detector 46 indicates that the space S into which the tip sandwiching unit 22 is insertable is formed between the cargo C to be held and another article disposed next to the cargo C.

The drive controller 50C determines whether or not the space S into which the tip sandwiching unit 22 is insertable is formed using both the captured image captured by the image capturing unit 40 and the detection result by the space detector 46, so that it is possible to quickly and reliably determine the formation of the space S for the cargo C.

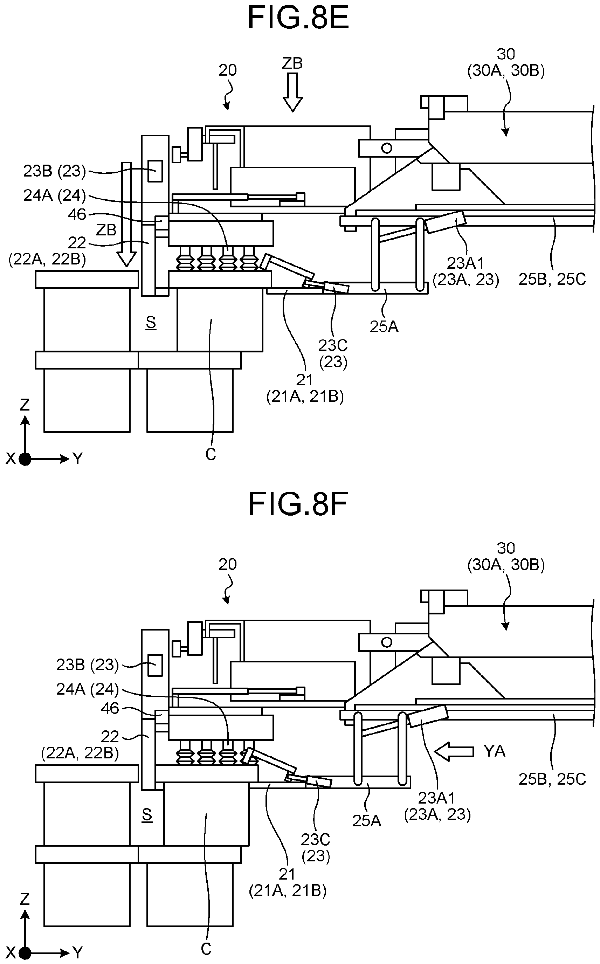

Then, when determining that the space S is formed, the drive controller 50C controls the second sandwiching driver 23B of the sandwiching driver 23 to insert the tip sandwiching unit 22 into the space S as illustrated in FIG. 8E (the arrow ZB direction). Specifically, the drive controller 50C performs control of driving the second sandwiching driver 23B to rotationally drive the tip link unit 22A. Through this control, the drive controller 50C switches the state of the tip sandwiching unit 22 including the tip link unit 22A and the claw unit 22B from the retracted state to the developed state. The switch of the state to the developed state makes the tip sandwiching unit 22 inserted into the formed space S. Further, the claw unit 22B of the tip sandwiching unit 22 is in the developed state.

Next, as illustrated in FIG. 8F, the drive controller 50C controls the first sandwiching driver 23A and the third sandwiching driver 23C such that the cargo C is sandwiched between the tip sandwiching unit 22 and the edge holding unit 21. Through this control, the cargo C is held by being sandwiched by the edge holding unit 21 and the tip sandwiching unit 22. The drive controller 50C may determine whether or not the cargo C has been sandwiched by the edge holding unit 21 and the tip sandwiching unit 22 by determining whether or not a detection result indicating sandwiching of the cargo C has been received from each of the first sandwiching detector 42A and the second sandwiching detector 42B.

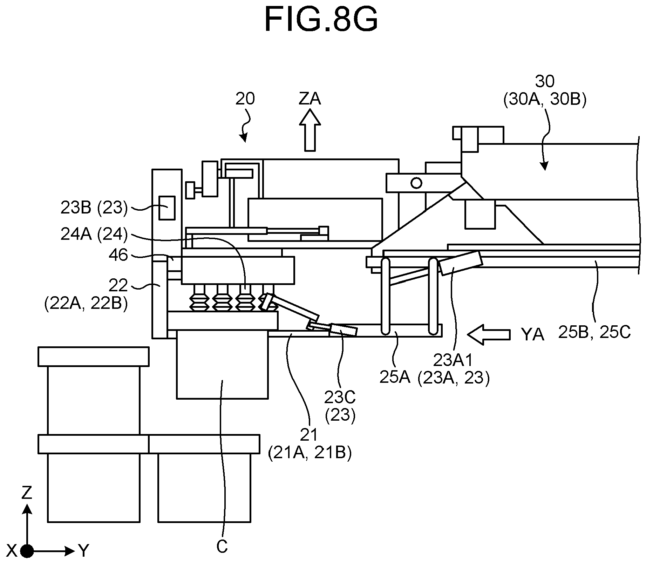

Then, as illustrated in FIG. 8G, the drive controller 50C controls the arm driver 30B to move the cargo C held by the edge holding unit 21 and the tip sandwiching unit 22 toward a predetermined position such as on the conveyor 31.

Next, a flow when the suctioning-holding method is determined as the holding method and the weight detector 44 determines that the weight is an unacceptable weight for suctioning by the suctioning unit 24 will be described.

That is, although the suctioning-holding method is determined as the holding method, the weight of the cargo C detected by the weight detector 44 may be determined as an unacceptable weight for suctioning. In this case, after controlling the suctioning unit 24 such that the space S into which the tip sandwiching unit 22 is insertable is formed with respect to the cargo C, the drive controller 50C may control the sandwiching driver 23 such that the cargo C is sandwiched between the edge holding unit 21 and the tip sandwiching unit 22. That is, in this case, the drive controller 50C may perform control to switch from the holding by suctioning to the holding by sandwiching.

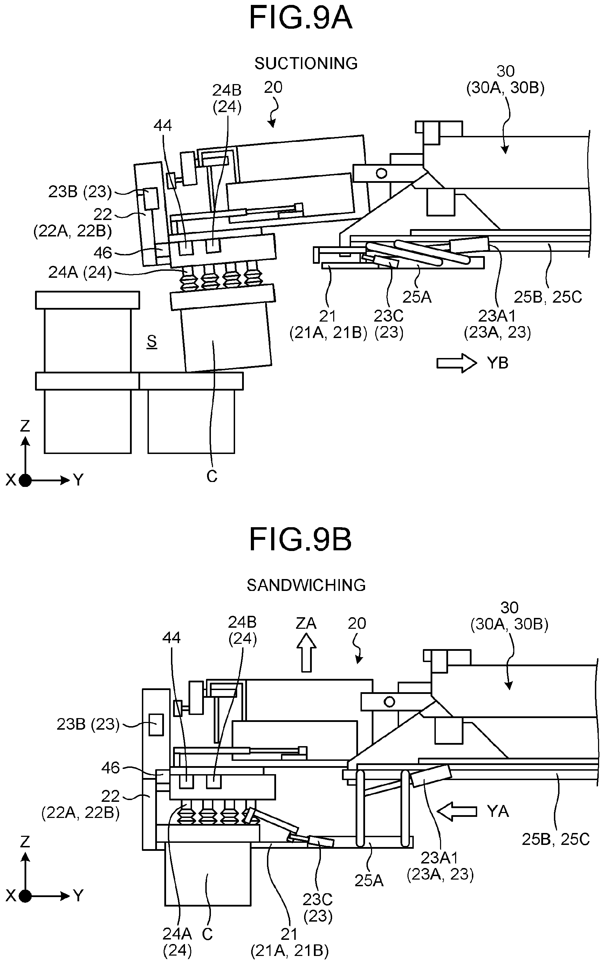

FIGS. 9A and 9B are explanatory views of an example of a case where holding by suctioning is switched to holding by sandwiching.

As illustrated in FIG. 9A, for example, the drive controller 50C controls the suctioning driver 24B such that the suctioning mechanism 24A of the suctioning unit 24 suctions the cargo C. For example, the drive controller 50C controls the suctioning driver 24B and the arm driver 30B such that the cargo C is suctioned to a height at which the weight detector 44 included in the suctioning unit 24 can detect the weight of the cargo C.

In a case where the weight of the cargo C detected by the weight detector 44 is an unacceptable weight for suctioning, the drive controller 50C controls the suctioning driver 24B such that the suctioning unit 24 is inclined to bring the cargo C into a state where the edge holding unit 21 side is lifted. Specifically, the drive controller 50C controls the suctioning driver 24B to incline the suctioning mechanism 24A. Then, the drive controller 50C further controls the arm driver 30B to move the cargo C in the arrow YB direction and form the space S between the cargo C and another article.

Then, as illustrated in FIG. 9B, the drive controller 50C may control the sandwiching driver 23 and the arm driver 30B similarly to the case where the suctioning-holding method is determined, such that the cargo C is held by sandwiching by the edge holding unit 21 and the tip sandwiching unit 22.

Note that the drive controller 50C may control the sandwiching driver 23 such that the cargo C is sandwiched by the edge holding unit 21 and the tip sandwiching unit 22 while maintaining a state in which the suctioned state of the cargo C by the suctioning unit 24. In this case, the drive controller 50C can perform control such that the cargo C is held both by suctioning by the suctioning unit 24 and sandwiching by the edge holding unit 21 and the tip sandwiching unit 22. In addition, the cargo C can be held even when the cargo C is difficult to hold only by sandwiching by the edge holding unit 21 and the tip sandwiching unit 22 or only by suctioning by the suctioning unit 24.

Next, an example of a flow of information processing performed by the cargo handling apparatus 10 according to the present arrangement will be described.

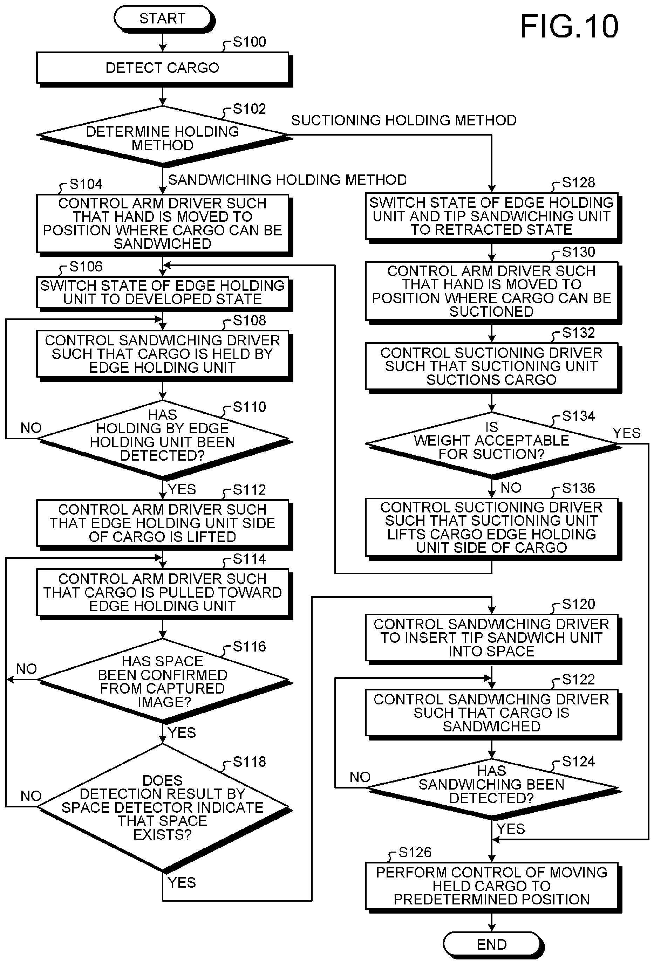

FIG. 10 is a flowchart illustrating an example of a flow of information processing performed by the cargo handling apparatus 10 according to the present arrangement.

The article detector 50A detects the cargo C to be held (Step S100). The article detector 50A detects the position, size, and type of the cargo C to be held by performing image analysis on the captured image captured by the image capturing unit 40.

The holding method determination unit 50B determines the method of holding the cargo C (Step S102). The holding method determination unit 50B determines a holding method indicating either a suctioning-holding method or a sandwiching holding method based on the detection result of the cargo C in Step S100.

In a case where it is determined in Step S102 that the holding method is the sandwiching holding method, the processing proceeds to Step S104. In Step S104, the drive controller 50C controls the arm driver 30B such that the hand 20 supported by the arm main body 30A is moved to a position where the cargo C can be sandwiched (Step S104).

Next, the drive controller 50C controls the air cylinder 23A1 such that the edge holding unit 21 is brought into the developed state (step S106). By the processing of Step S106, the state of the edge holding unit 21 is switched to the developed state. Then, the drive controller 50C drives the air cylinder 23A1 to adjust the position of the edge holding unit 21 to a position where the edge holding unit 21 can hold the cargo C.

Next, the drive controller 50C controls the third sandwiching driver 23C such that the edge portion of the cargo C is held by the first claw unit 21A and the second claw unit 21B (Step S108). The drive controller 50C determines whether or not the holding of the cargo C by the edge holding unit 21 has been detected by the first sandwiching detector 42A (Step S110). When a negative determination is made in Step S110 (Step S110: No), the processing returns to Step S108. When an affirmative determination is made in Step S110 (Step S110: Yes), the processing proceeds to Step S112.

In Step S112, the drive controller 50C controls the arm driver 30B to lift the hand 20 in a direction opposite to the gravity direction (Step S112). Through the control in Step S112, controls is performed such that the edge holding unit 21 side of the cargo C is lifted.

Next, the drive controller 50C controls the arm driver 30B such that the cargo C is pulled toward the edge holding unit 21 (Step S114).

Next, the drive controller 50C determines whether or not the space S into which the tip sandwiching unit 22 is insertable is formed between the cargo C to be held and another article disposed next to the cargo C by performing image analysis on the captured image captured by the image capturing unit 40 (Step S116). When a negative determination is made in Step S116 (Step S116: No), the processing returns to Step S114. When an affirmative determination is made in Step S116 (Step S116: Yes), the processing proceeds to Step S118.

In Step S118, the drive controller 50C determines whether or not the detection result by the space detector 46 indicates that the space S into which the tip sandwiching unit 22 is insertable is formed between the cargo C to be held and another article disposed next to the cargo C (Step S118). When a negative determination is made in Step S118 (Step S118: No), the processing returns to Step S114. When an affirmative determination is made in Step S118 (Step S118: Yes), the processing proceeds to Step S120.

In step S120, the drive controller 50C controls the second sandwiching driver 23B of the sandwiching driver 23 to insert the tip sandwiching unit 22 into the space S (Step S120). By the processing of Step S120, the tip sandwiching unit 22 is inserted into the space S.

Next, the drive controller 50C controls the first sandwiching driver 23A and the third sandwiching driver 23C such that the cargo C is sandwiched between the tip sandwiching unit 22 and the edge holding unit 21 (Step S122). The drive controller 50C determines whether or not the sandwiching of the cargo C has been detected by both the first sandwiching detector 42A and the second sandwiching detector 42B (Step S124). When a negative determination is made in Step S124 (Step S124: No), the processing returns to Step S122. When an affirmative determination is made in Step S124 (Step S124: Yes), the processing proceeds to Step S126.

In Step S126, the drive controller 50C controls the arm driver 30B to move the cargo C held by the edge holding unit 21 and the tip sandwiching unit 22, or by the suctioning unit 24 toward a predetermined position such as on the conveyor 31 (Step S126). Then, this routine ends.

On the other hand, in a case where it is determined in Step S102 that the holding method is the suctioning-holding method, the processing proceeds to Step S128. In Step S128, the drive controller 50C controls the sandwiching driver 23 such that the edge holding unit 21 and the tip sandwiching unit 22 is brought into the retracted state (Step S128). By the processing of Step S128, the states of both the edge holding unit 21 and the tip sandwiching unit 22 are switched to the retracted state where the edge holding unit 21 or the tip sandwiching unit 22 does not interfere with the cargo C.

Next, the drive controller 50C controls the arm driver 30B such that the hand 20 supported by the arm main body 30A is moved to a position where the cargo C can be suctioned (Step S130) .

Next, the drive controller 50C controls the suctioning driver 24B such that the suctioning mechanism 24A of the suctioning unit 24 suctions the cargo C (Step S132). The drive controller 50C controls the suctioning driver 24B and the arm driver 30B such that the cargo C is suctioned and lifted to a height at which the weight detector 44 included in the suctioning unit 24 can detect the weight of the cargo C.

Next, the drive controller 50C determines whether or not the weight of the cargo C suctioned in Step S132 is an acceptable weight for suctioning by the suctioning unit 24 (Step S134). The drive controller 50C performs the processing of Step S134 by determining whether or not the weight of the cargo C detected by the weight detector 44 is an acceptable weight for suctioning by the suctioning unit 24.

In a case where it is determined that the weight is an acceptable weight for suctioning (Step S134: Yes), the processing proceeds to Step S126. In a case where it is determined that the weight is an unacceptable weight for suctioning (Step S134: No), the processing proceeds to Step S136.

In Step S136, the drive controller 50C controls the suctioning driver 24B such that the cargo C is inclined into a state where the edge holding unit 21 side of the cargo C is lifted (Step S136). Then, the processing proceeds to Step S106 described above.

As described above, the cargo handling apparatus 10 according to the present arrangement includes the holding method determination unit 50B and the hand 20. The holding method determination unit 50B determines the method of holding the cargo C (article). The hand 20 includes an edge holding unit 21 and a tip sandwiching unit 22 for holding the cargo C by sandwiching, and a suctioning unit 24 for holding the cargo C by suctioning, and holds the cargo C according to the determination result of the holding method.

As described above, the cargo handling apparatus 10 according to the present arrangement includes the edge holding unit 21 and the tip sandwiching unit 22 for holding the cargo C by sandwiching the holding the cargo C, and the suctioning unit 24 for holding the cargo C by suctioning. Then, the hand 20 including the edge holding unit 21, the tip sandwiching unit 22, and the suctioning unit 24 holds the cargo C according to the holding method determined depending on the cargo C to be held.

Therefore, the cargo handling apparatus 10 according to the present arrangement can hold the cargo C switching the holding method corresponding to an article such as the cargo C, that is by switching between holding by suctioning by the suctioning unit 24 and holding by sandwiching by the edge holding unit 21 and the tip sandwiching unit 22, or by combination of those ways of holding according to the article. That is, the cargo handling apparatus 10 according to the present arrangement can hold the cargo C by a holding method corresponding to the cargo C.

Therefore, the cargo handling apparatus 10 according to the present arrangement can improve the performance of holding the article, which is the cargo C.

Next, an example of a hardware configuration of the controller 50 in the cargo handling apparatus 10 according to the above arrangement will be described.

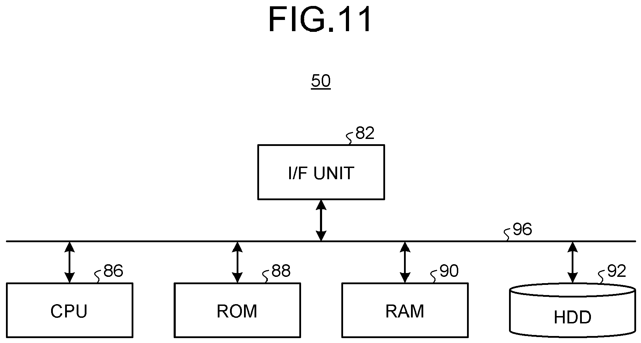

FIG. 11 is a diagram illustrating an example of a hardware configuration of the controller 50.

The controller 50 includes a control device such as a CPU 86, a storage device such as a read only memory (ROM) 88, a random access memory (RAM) 90, and a hard disk drive (HDD) 92, an I/F unit 82 that is an interface with various devices, and a bus 96 that connects the respective units, and has a hardware configuration using a general computer.

In the controller 50 of the above arrangement, the CPU 86 reads a program from the ROM 88 onto the RAM 90 and executes the program, whereby the above-described units are implemented on the computer.

Note that the program executed by the controller 50 according to the above-described arrangement for performing each step of the above-described processing may be stored in the HDD 92. In addition, the program executed by the controller 50 according to the above-described arrangement for performing each step of the above-described processing may be incorporated in the ROM 88 in advance and provided.

In addition, the program executed by the controller 50 according to the above arrangement for performing the above processing may be stored in a computer-readable storage medium such as a CD-ROM, a CD-R, a memory card, a digital versatile disk (DVD), or a flexible disk (FD) as a file in an installable format or an executable format and provided as a computer program product. In addition, the program executed by the controller 50 according to the above arrangement for performing the above processing may be stored in a computer connected to a network such as the Internet and provided by being downloaded via the network. In addition, the program executed by the controller 50 according to the above arrangement for performing the above processing may be provided or distributed via a network such as the Internet.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made.

Example 1. According to an arrangement, a cargo handling apparatus (10) includes a holding method determination unit (50B) and a hand (20). The holding method determination unit (50B) determines a method of holding an article. The hand (20) includes an edge holding unit (21) and a tip sandwiching unit (22) that hold the article by sandwiching, and a suctioning unit (24) that holds the article by suctioning, and holds the article according to a determination result of the holding method.

Example 2. The cargo handling apparatus (10) according to example 1 further includes a drive controller (50C) that controls the hand (20) such that the hand (20) holds the article based on the determination result of the holding method.

Example 3. The cargo handling apparatus (10) according to example 2 further includes an arm (30) that includes an arm driver (30B) for adjusting a position of the hand (20) and that supports the hand (20). The drive controller (50C) controls the hand (20) and the arm (30) such that the article is held based on the determination result.

Example 4. The cargo handling apparatus (10) according to example 2 or 3 further includes an article detector (50A) that detects the article. The holding method determination unit determines the holding method indicating one of a suctioning-holding method for holding the article by suctioning and a sandwiching holding method for holding the article by sandwiching, based on a detection result of the article. The drive controller (50C) controls the hand (20), in a case where the sandwiching holding method is determined as the holding method, such that the article is sandwiched between the edge holding unit (21) and the tip sandwiching unit (22).

Example 5. In the cargo handling apparatus (10) according to example 4, the drive controller (50C) controls the hand (20), in a case where the sandwiching holding method is determined as the holding method, such that a space, into which the tip sandwiching unit (22) is insertable, is formed with respect to the article. Thereafter, the drive controller (50C) controls the hand (20) such that the tip sandwiching unit (22) is inserted into the space and the article is sandwiched between the tip sandwiching unit (22) and the edge holding unit (21).

Example 6. In the cargo handling apparatus (10) according to example 5, the drive controller (50C) performs control such that an edge portion of the article is held by the edge holding unit (21), lifts the hand (20) in a direction opposite to a gravity direction, and controls the hand (20) such that the article is pulled toward the edge holding unit (21) until it is determined that the space is formed.

Example 7. In the cargo handling apparatus (10) according to any one of examples 4 to 6, the drive controller (50C) controls the suctioning unit (24), in a case where the suctioning-holding method is determined as the holding method, such that the suctioning unit (24) suctions the article.

Example 8. In the cargo handling apparatus (10) according to any one of examples 4 to 7, the drive controller (50C) controls the hand (20), in a case where the suctioning-holding method is determined as the holding method, to be in a retracted state in which at least one of the edge holding unit (21) and the tip sandwiching unit (22) is retracted to a position of not interfering with the article.

Example 9. The cargo handling apparatus (10) according to any one of examples 4 to 8 further includes a weight detector (44) that detects a weight of the article. The drive controller (50C) controls the hand (20), in a case where the suctioning-holding method is determined as the holding method and the detected weight of the article is an unacceptable weight for suctioning, such that a space into which the tip sandwiching unit (22) is insertable is formed with respect to the article. Thereafter, the drive controller (50C) controls the hand (20) such that the article is sandwiched between the edge holding unit (21) and the tip sandwiching unit (22).

Example 10. According to an arrangement, a cargo handling method is performed by a cargo handling apparatus (10) including a hand (20) that includes an edge holding unit (21) and a tip sandwiching unit (22) that hold an article by sandwiching, and a suctioning unit (24) that holds the article by suctioning. The cargo handling method includes determining a method of holding the article, and controlling the hand (20) such that the article is held based on a determination result of the holding method.

Example 11. According to an arrangement, a cargo handling computer program product includes a computer-readable medium including programmed instructions stored therein and the instructions cause a computer for controlling a cargo handling apparatus including a hand (20) including an edge holding unit (21) and a tip sandwiching unit (22) that hold an article by sandwiching, and a suctioning unit (24) that holds the article by suctioning, to perform determining a method of holding the article; and controlling the hand (20) such that the article is held based on a determination result of the holding method.

## Claims

1. A cargo handling apparatus (10) comprising:
a holding method determination unit (50B) that determines a method of holding an article; and
a hand (20) that includes an edge holding unit (21) and a tip sandwiching unit (22) that hold the article by sandwiching, and a suctioning unit (24) that holds the article by suctioning, and holds the article according to a determination result of the holding method.

2. The cargo handling apparatus (10) according to claim 1 further comprising:
a drive controller (50C) that controls the hand (20) such that the hand (20) holds the article based on the determination result of the holding method.

3. The cargo handling apparatus (10) according to claim 2 further comprising:
an arm (30) that includes an arm driver (30B) for adjusting a position of the hand (20) and that supports the hand (20),
wherein the drive controller (50C)
controls the hand (20) and the arm (30) such that the article is held based on the determination result.

4. The cargo handling apparatus (10) according to claim 2 or 3 further comprising:
an article detector (50A) that detects the article,
wherein the holding method determination unit
determines the holding method indicating one of a suctioning-holding method for holding the article by suctioning and a sandwiching holding method for holding the article by sandwiching, based on a detection result of the article; and
wherein the drive controller (50C)
controls the hand (20), in a case where the sandwiching holding method is determined as the holding method, such that the article is sandwiched between the edge holding unit (21) and the tip sandwiching unit (22).

5. The cargo handling apparatus (10) according to claim 4,
wherein the drive controller (50C)
controls the hand (20), in a case where the sandwiching holding method is determined as the holding method, such that a space, into which the tip sandwiching unit (22) is insertable, is formed with respect to the article, and
thereafter, controls the hand (20) such that the tip sandwiching unit (22) is inserted into the space and the article is sandwiched between the tip sandwiching unit (22) and the edge holding unit (21).

6. The cargo handling apparatus (10) according to claim 5,
wherein the drive controller (50C)
performs control such that an edge portion of the article is held by the edge holding unit (21), lifts the hand (20) in a direction opposite to a gravity direction, and controls the hand (20) such that the article is pulled toward the edge holding unit (21) until it is determined that the space is formed.

7. The cargo handling apparatus (10) according to any one of claims 4 to 6,
wherein the drive controller (50C)
controls the suctioning unit (24), in a case where the suctioning-holding method is determined as the holding method, such that the suctioning unit (24) suctions the article.

8. The cargo handling apparatus (10) according to any one of claims 4 to 7,
wherein the drive controller (50C)
controls the hand (20), in a case where the suctioning-holding method is determined as the holding method, to be in a retracted state in which at least one of the edge holding unit (21) and the tip sandwiching unit (22) is retracted to a position of not interfering with the article.

9. The cargo handling apparatus (10) according to any one of claims 4 to 8 further comprising:
a weight detector (44) that detects a weight of the article,
wherein the drive controller (50C)
controls the hand (20), in a case where the suctioning-holding method is determined as the holding method and the detected weight of the article is an unacceptable weight for suctioning, such that a space into which the tip sandwiching unit (22) is insertable is formed with respect to the article, and
thereafter, controls the hand (20) such that the article is sandwiched between the edge holding unit (21) and the tip sandwiching unit (22).

10. A cargo handling method performed by a cargo handling apparatus (10) including a hand (20) that includes an edge holding unit (21) and a tip sandwiching unit (22) that hold an article by sandwiching, and a suctioning unit (24) that holds the article by suctioning, the cargo handling method comprising:
determining a method of holding the article; and
controlling the hand (20) such that the article is held based on a determination result of the holding method.

11. A cargo handling computer program product comprising a computer-readable medium including programmed instructions stored therein, the instructions causing a computer for controlling a cargo handling apparatus including a hand (20) including an edge holding unit (21) and a tip sandwiching unit (22) that hold an article by sandwiching, and a suctioning unit (24) that holds the article by suctioning, to perform:
determining a method of holding the article; and
controlling the hand (20) such that the article is held based on a determination result of the holding method.
